# EUROPÄISCHE PATENTSCHRIFT

(11) **EP 1 210 832 B1**
(45) Veröffentlichungstag und Bekanntmachung des Hinweises auf die Patenterteilung: **29.10.2003**
(21) Anmeldenummer: 99939891.0
(22) Anmeldetag: 07.09.1999
(51) Int. Cl.: H04Q 7/36

(54) **VERFAHREN ZUR ERMITTLUNG DER VERSORGUNGSQUALITÄT IN EINEM TELEKOMMUNIKATIONSNETZ UND ENTSPRECHENDES MOBILTELEKOMMUNIKATIONSENDGERÄT**
METHOD FOR DETECTING THE SUPPLY QUALITY IN A TELECOMMUNICATION NETWORK AND CORRESPONDING MOBILE TELECOMMUNICATION TERMINAL
PROCEDE POUR DETERMINER LA QUALITE DE COUVERTURE DANS UN RESEAU DE TELECOMMUNICATION ET TERMINAL DE TELECOMMUNICATION MOBILE CORRESPONDANT

(43) Veröffentlichungstag der Anmeldung: 05.06.2002
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: Saam, Christophe
(86) Internationale Anmeldenummer: CH9900417
(87) Internationale Veröffentlichungsnummer: WO01019108

(56) Entgegenhaltungen:
- GB-A- 2 271 486
- PATENT ABSTRACTS OF JAPAN vol. 1995, no. 06, 31. Juli 1995 (1995-07-31) -& JP 07 066764 A (JAPAN RADIO CO LTD), 10. März 1995 (1995-03-10)

## Beschreibung

Die vorliegende Erfindung betrifft ein Verfahren, um die Versorgungsqualität entlang einer gefahrenen Trajektorie in einem Mobilfunknetz vorherzusagen.

In den meisten Ländern und Gebieten, über welche sich zellulare Mobilfunknetze erstrecken, ist die Versorgungsqualität nicht homogen. Oft werden bestimmte Gebiete, unter anderem dünn besiedelte Gebiete, gar nicht versorgt, während die Versorgungsqualität in anderen Gebieten schlecht ist. Die Qualität ist ausserdem von mehreren Parametern abhängig, beispielsweise von der Wettertage, von der Jahreszeit, insbesondere wegen unterschiedlicher Absorption durch die Vegetation, usw.

GB2271486 beschreibt ein System, mit welchem die Versorgungsqualität auf einem Gebiet ermittelt werden kann. Jedes Mobilgerät im Netz sendet regeimässig seinen Standort, welcher mittels GPS Empfänger bestimmt wird, an einen Kontroller in der Infrastruktur des Netzes. Die Qualität der Übertragung mit den Mobilgeräten wird von der Infrastruktur gemessen. Eine Datenbank registriert für jede Position im Gebiet die Übertragungsqualität. Diese Datenbank wird vom Netzbetreiber verwendet, um beispielsweise Handover zwischen Zellen zu optimieren, oder um die Planung des Netzes zu verbessern. Der Mobilteilnehmer kann jedoch nicht auf diese Datenbank zugreifen.

Ein Ziel der Erfindung ist es, ein Verfahren vorzuschlagen, mit weichem Mobliteilnehmer die Versorgungsqualität vorhersagen können.

Ein Ziel der Erfindung ist es auch, die Versorgungsqualität entlang einer Trajektorie mit einem Vehikel vorherzusagen.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass die Trajektorie des Vehikels im voraus geplant wird, und dass die Versorgungsqualität entlang dieser Trajektorie anhand der in einem Mobiltelekommunikationsendgerät verfügbaren Angaben über die geographische Verteilung der Versorgungsqualität ermittelt wird.

Beispielsweise wird die zu erwartende Versorgungsqualität entlang einer zu fahrenden Strecke anhand einer im Mobiltelekommunikationsendgerät vorhandenen Versorgungskarte ermittelt. Die Versorgungskarte kann beispielsweise im Mobiltelekommunikationsendgerät, in einer Identifizierungskarte im Mobiltelekommunikationsendgerät oder in einem aus dem Mobiltelekommunikationsendgerät zugänglichen Server gespeichert sein.

Mit diesem Verfahren kann der Benutzer oder das Endgerät entscheiden, ob und wann eine Verbindung aufgebaut werden soll, oder ob und wann ein Datenblock gesendet wird.

Ebenso kann der Benutzer oder das Endgerät erfahren, welches Mobilfunknetz die beste Versorgung entlang der geplanten Strecke zur Verfügung stellt, und somit entscheiden, in welchem Netz er oder es sich einloggen will.

Falls der Benutzer schon eine Verbindung aufgebaut hat, kann er ausserdem kurz vor einem Verbindungsabbruch, beispielsweise bevor das Vehikel in einen Tunnel oder in ein nicht abgedecktes Gebiet eintritt, informiert werden, beispielsweise durch ein Tonsignal im Hörer oder durch eine Meldung auf der Anzeige des Mobiltelekommunikationsendgerätes.

Falls mehrere Strecken möglich sind, kann ausserdem der Benutzer anhand der Versorgungskarte erfahren, welche Strecke am besten versorgt ist und somit entscheiden, welche Strecke er bereisen will.

Im folgenden werden anhand der beigefügten Zeichnungen bevorzugte Ausführungsbeispiele der Erfindung näher beschrieben. Es zeigen:

Die Figur 1 ein Beispiel eines Gebietes, das teilweise von einem Mobilfunknetz abgedeckt ist, sowie die Trajektorie eines Vehikels über dieses Gebiet.

Die Figur 2 ein Telekommunikationsendgerät mit einer Identifizierungskarte gemäss der Erfindung.

Die Figur 3 ein erstes Beispiel von Angaben über die geographische Verteilung der Versorgungsqualität in einem geographischen Gebiet.

Die Figur 4 ein zweites Beispiel von Angaben über die geographische Verteilung der Versorgungsqualität entlang einer monodirektionalen Strecke.

Die Figur 5 ein Beispiel eines Gebietes, das teilweise von zwei verschiedenen Mobilfunknetzen abgedeckt wird, sowie die Trajektorie eines Vehikels über dieses Gebiet.

Die Figur 6 ein drittes Beispiel von Angaben über die geographische Verteilung der Versorgungsqualität von zwei verschiedenen Mobilfunknetzen in einem bidimensionalen Gebiet.

Die Figur 7 ein viertes Beispiel von Angaben über die geographische Verteilung der Versorgungsqualität von zwei verschiedenen Mobilfunknetzen entlang einer monodirektionalen Strecke.

Obwohl diese Erfindung in mehr Details den speziellen Fall eines GSM-Mobilfunknetzes beschreibt, wird der Fachmann verstehen, dass dieses Verfahren auch mit anderen Typen von zellularen Mobilfunknetzen, beispielsweise mit AMPS, TDMA, CDMA, TACS, PDC, HCSCD, GPRS, EDGE oder UMTS-Netzen, eingesetzt werden kann.

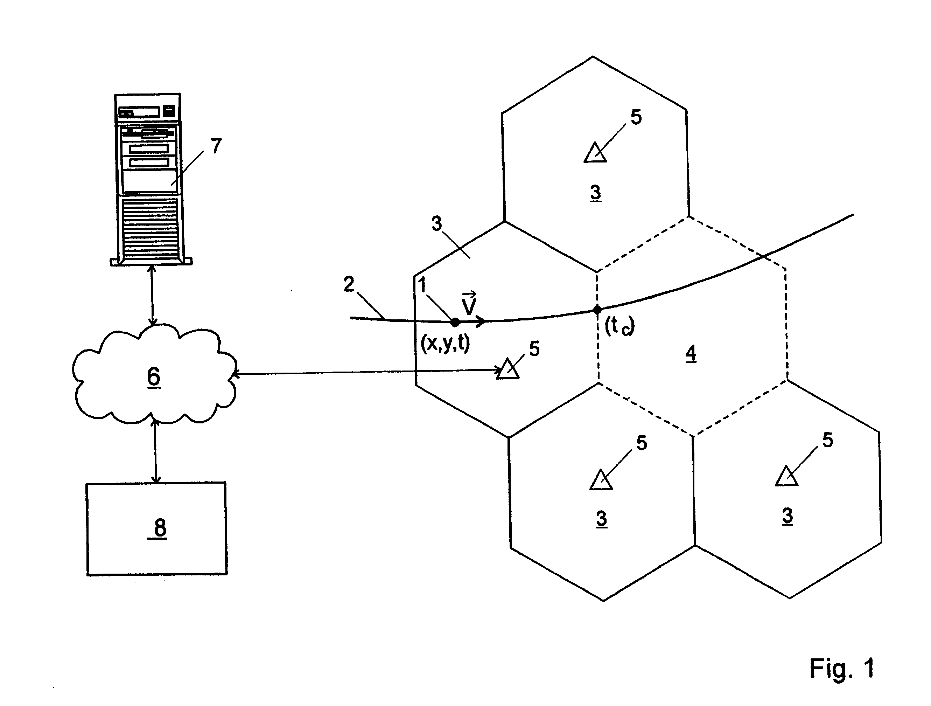

Die Figur 1 zeigt in schematischer Weise ein zellulares Mobilfunknetz 6, beispielsweise ein GSM-Mobilfunknetz, wobei einige einzelne Zellen 3 dieses Mobilfunknetzes separat dargestellt sind. Jede Zelle 3 enthält eine Basisstation 5. Das Mobilfunknetz 6 erstreckt sich über ein Gebiet, innerhalb welchem die Qualität der Versorgung unterschiedlich ist. Im dargestellten Beispiel enthält das Gebiet einen Bereich 4, der gar nicht versorgt wird, und drei Bereiche, die theoretisch optimal von den Zellen 3 des Mobilfunknetzes 6 abgedeckt werden. Die Versorgungsqualität Q kann als Variante mit einem oder mehreren nicht binären Parametern angegeben werden, und beispielsweise einer Dienstqualität (QoS, Quality of Services) entsprechen. Die Versorgungsqualität Q kann beispielsweise Parameter wie verfügbare Bandbreite, Vermittlungszeit, Anzahl verfügbarer Kanäle, verlangten Verbindungspreis, Vertraulichkeit der Übertragung usw. enthalten.

Ein symbolisch mit einem Punkt dargestelltes Vehikel bewegt sich entlang einer Trajektorie 2 durch das Gebiet, wobei der Standort des Vehikels zum Zeitpunkt t mit den Koordinaten x,y und seine Geschwindigkeit mit dem Vektor v angegeben werden.

Das Vehikel ist vorzugsweise ein Zug oder ein anderes Vehikel, das über eine vordefinierte bekannte Strecke in einem endlichen Netz, beispielsweise entlang einer Bahn in einem Eisenbahnnetz, fährt. In diesem Fall ist die Trajektorie des Vehikels bekannt und beispielsweise in einem Speicherbereich 17 des Endgerätes 1 abgelegt. Die Position des Vehikels entlang dieser Trajektorie kann mit einer einzigen Zahl angegeben werden, die einer numerierten Position des Vehikels im Netz entspricht, beispielsweise der longitudinalen Position des Vehikels entlang der Trajektorie 2.

In einer Variante ist das Vehikel ein Auto, ein Schiff, ein Flugzeug oder auch ein Fussgänger, der sich frei durch ein zweidimensionales Gebiet bewegt In diesem Fall muss die Position des Vehikels mit zwei Koordinaten angegeben werden. Solche Vehikel fahren meistens nicht entlang vordefinierten Strecken, so dass die geplante Trajektorie manuell eingegeben werden muss, beispielsweise vom Fahrer des Vehikels. Autoboardcomputer, die als Reisehilfe dienen und die optimale Strecke zwischen zwei vom Fahrer angegebenen Punkten in einem Strassennetz automatisch ermitteln, sind an sich schon bekannt und können im Rahmen dieser Erfindung angewendet werden, um diese Trajektorie einzugeben oder zu berechnen. Verfügt das Vehikel über einen Geschwindigkeitsmesser, wird vorzugsweise die Trajektorie 2 anhand dieser Geschwindigkeit ermittelt.

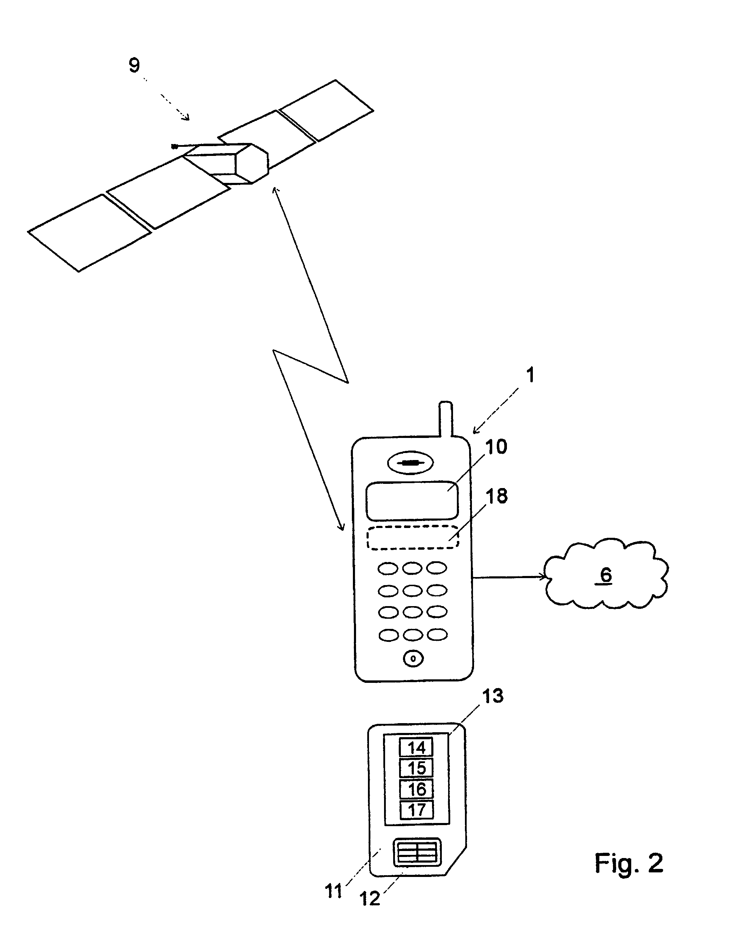

Das Vehikel verfügt über ein auf der Figur 2 dargestelltes Mobiltelekommunikationsendgerät 1, beispielsweise ein Mobiltelefon, ein Mediatelefon, ein Laptop, Palmtop oder Rechner mit einer Mobiltelekommunikationsschnittstelle usw. Das Endgerät 1 weist Wiedergabemittel 10, beispielsweise eine Anzeige und einen Lautsprecher, und Eingabemittel, beispielsweise eine Tastatur und ein Mikrophon, auf. Ein Identifizierungsmodul 11, beispielsweise eine SIM-Karte (Subscriber Identification Module), ist vorzugsweise im Endgerät 1 enthalten und weist eine Identifizierung des Benutzers auf.

Das Vehikel enthält ausserdem Standortbestimmungsmittel 18, beispielsweise einen Empfänger für Signale aus einem Standortbestimmungssatellit 9, beispielsweise einen GPS-Empfänger (Global Positionning System), oder ein System, welches die Position des Vehikels aus trigonometrischen Berechnungen von Signalen einer Vielzahl von Basisstationen (5, 5') ermitteln kann. Fährt das Vehikel, beispielsweise ein Zug, mit einem vordefinierten Fahrplan entlang einer vordefinierten Strecke, können die Standortbestimmungsmittel 18 in einer billigen Variante auch aus einer einfachen Uhr bestehen, mit welcher der Standort des Vehikels aus dem Fahrplan ermittelt werden kann.

Das Bezugszeichen 8 zeigt eine Vorrichtung, die aus dem Mobilfunknetz erreicht werden kann, beispielsweise ein Mobilgerät, ein Fixnetzgerät, oder einen Rechner mit einem telefonischen Anschluss, beispielsweise einen Internet- oder WAP-Server (Wireless Application Protocol).

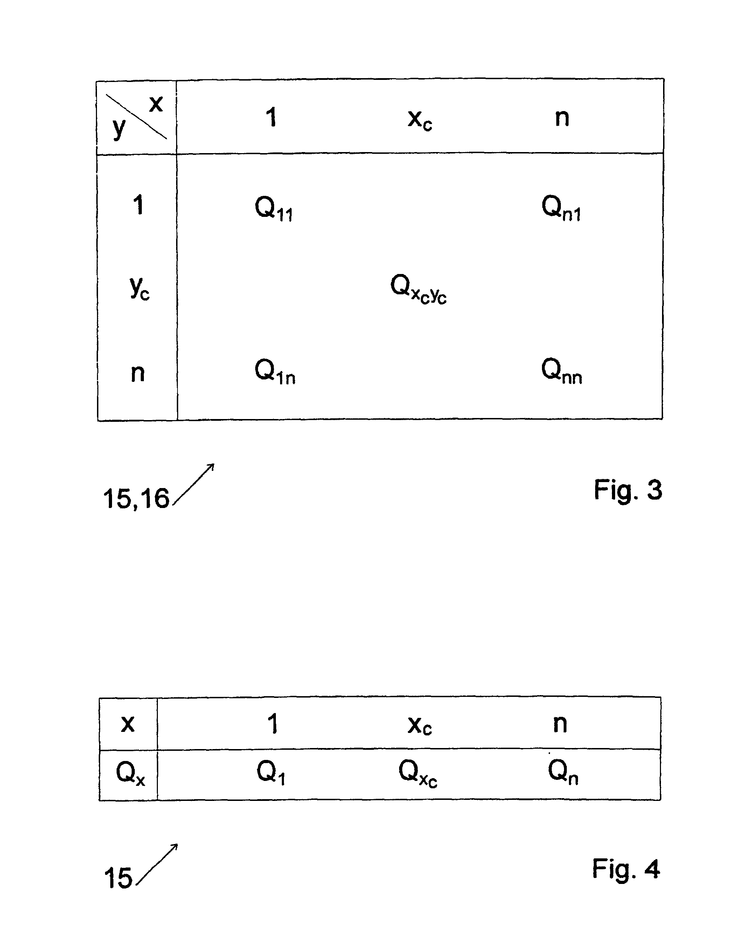

Ein Server 7, der eine Versorgungskarte auswertet und/oder enthält, ist vorzugsweise im Mobilfunknetz 6 vorhanden. Die Figur 3 zeigt ein Beispiel einer solchen Versorgungskarte. In diesem Beispiel besteht die Karte aus einer Matrix, in welcher die an jedem Punkt xᵢ, yᵢ des Gebietes erreichte Versorgungsqualität Qᵢ angegeben ist Wie schon beschrieben kann die Versorgungsqualität Qᵢ im einfachsten Fall mit nur einem binären Parameter (versorgt/nicht versorgt) angegeben werden oder, in einer komplexeren Variante, aus einem oder sogar mehreren numerischen Werten bestehen.

Falls die Position des Vehikels im gefahrenen Netz mit einer einzigen Koordinate Xᵢ angegeben werden kann, kann die Versorgungskarte, wie auf der Figur 4 dargestellt, vereinfacht werden. In dieser Variante enthält die Matrix eine einzige Zeile, die die Versorgungsqualität Qᵢ in jedem Punkt des gefahrenen Netzes angibt.

Die im Server 7 gespeicherte Versorgungskarte kann vom Mobiltelekommunikationsendgerät 1 auf Anfrage abgerufen werden, beispielsweise periodisch oder jedesmal, wenn der Benutzer dies verlangt. In einer bevorzugten Variante wird diese vom Server 7 zusammengestellte Versorgungskarte in einem Speicherbereich des Endgerätes 1 kopiert, und periodisch oder auf Anfrage aktualisiert. In einer noch bevorzugteren Variante ist die Versorgungskarte in einem Speicherbereich 15 der Identifizierungskarte 11 kopiert und abgelegt. Es können auch nur Auszüge einer kompletten Versorgungskarte im Mobilgerät 1 oder im Identifizierungsmodul 11 kopiert werden. Die Versorgungskarte kann auch in einer mit dem Mobilgerät 1 verbundenen Vorrichtung abgelegt werden, beispielsweise in einem Boardcomputer in einem Auto.

Die Versorgungskarte kann statisch oder vorzugsweise dynamisch aktualisiert werden. Im letzteren Fall wird sie vorzugsweise durch Angaben über die Versorgungsqualität, die von mindestens einem Teil der Endgeräte 1 ermittelt werden, aktualisiert. Vorzugsweise weist zu diesem Zweck mindestens ein Teil der Endgeräte 1 Versorgungsqualitätsmessgeräte auf, mit welchen die an ihrer Position erreichte Versorgungsqualität gemessen werden kann. Das Messergebnis wird dann beispielsweise über SMS, USSD oder als Datenpaket an den Server 7 gesendet, der die Messangaben aller Endgeräte erfasst und durch statistische Berechnungen die zu erwartende Qualität Q_{xy} an jeden Punkt x,y berechnet und somit die Versorgungskarte baut.

In einer bevorzugten Variante der Erfindung sind die abgelegten Qualitätsangaben Q_{x,y} von verschiedenen Parametern abhängig, beispielsweise von der Jahreszeit und vom Wetter. Zu diesem Zweck kann beispielsweise die Versorgungskarte als eine Matrix mit drei oder mehr Dimensionen aufgebaut sein, wobei die zusätzlichen Dimensionen beispielsweise für die Jahreszeit und/oder das Wetter zuständig sind. Auf diese Weise kann an jedem Punkt x, y eine von der Jahreszeit und/oder vom Wetter abhängige Qualitätsangabe Q_{xy} abgelegt werden. Es ist auch möglich, in jedem Punkt x,y eine Funktion der Wetterlage oder der Jahreszeit als Qualitätsangabe Q_{xy} zu speichern. Endgeräte 1, die über entsprechende Datumermittlungsmittel, beispielsweise in der Form einer Quarzuhr, beziehungsweise über eine Wetterstation verfügen, können auf diese Weise zuverlässigere Vorhersagen über die Versorgungsqualität ermitteln. Selbstverständlich können diese wetter- und/oder jahreszeitabhängige Qualitätsangaben auch dynamisch aktualisiert werden.

Die ermittelte Versorgungsqualität entlang der geplanten Trajektorie kann vorzugsweise auf der Anzeige 10 des Endgerätes angezeigt werden. Verfügt das Endgerät über eine grosse Anzeige, zum Beispiel wenn das Endgerät in einem Autoboardcomputer integriert ist, kann beispielsweise diese geographische Verteilung der Qualität mit einer geographischen Karte dargestellt werden, in welcher die verschiedenen Versorgungsqualitäten beispielsweise mit verschiedenen Farben angegeben werden. Wenn das Endgerät 1 nur eine kleine Anzeige aufweist, werden vorzugsweise nur zusammengefasste Versorgungsparameter angezeigt, beispielsweise nur die Zeit bis zum nächsten Verbindungsabbruch (Punkt t_{c} auf Figur 1) oder die maximale Verbindungsdauer.

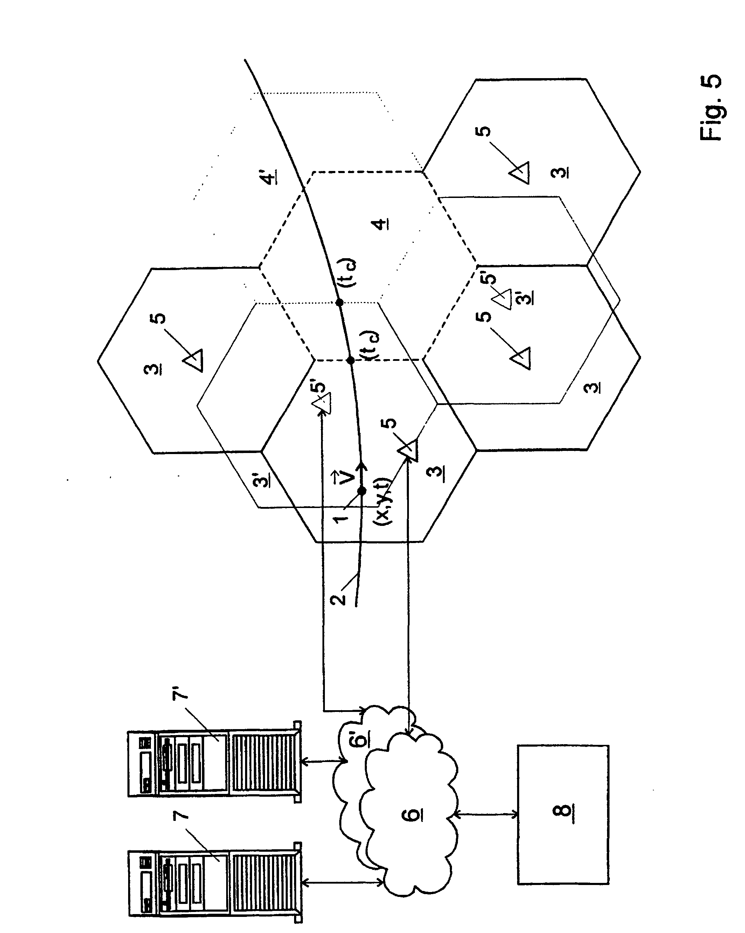

In vielen Ländern erstrecken sich über das gleiche Gebiet mehrere Mobilfunknetze 6, 6', die oft von verschiedenen Mobilfunknetzbetreibern betrieben werden, wie auf der Figur 5 schematisch dargestellt. Die mit diesen verschiedenen Mobilfunknetzen erreichte geographische Verteilung der Versorgungsqualität Q_{xy} ist meistens unterschiedlich und unter anderem von der Anordnung und den Eigenschaften der Basisstationen 5, 5' abhängig. In diesem Fall kann die während einer Reise entlang einer Trajektorie 2 erreichte Versorgungsqualität Q_{xy} stark vom ausgewählten Mobilfunknetz abhängig sein.

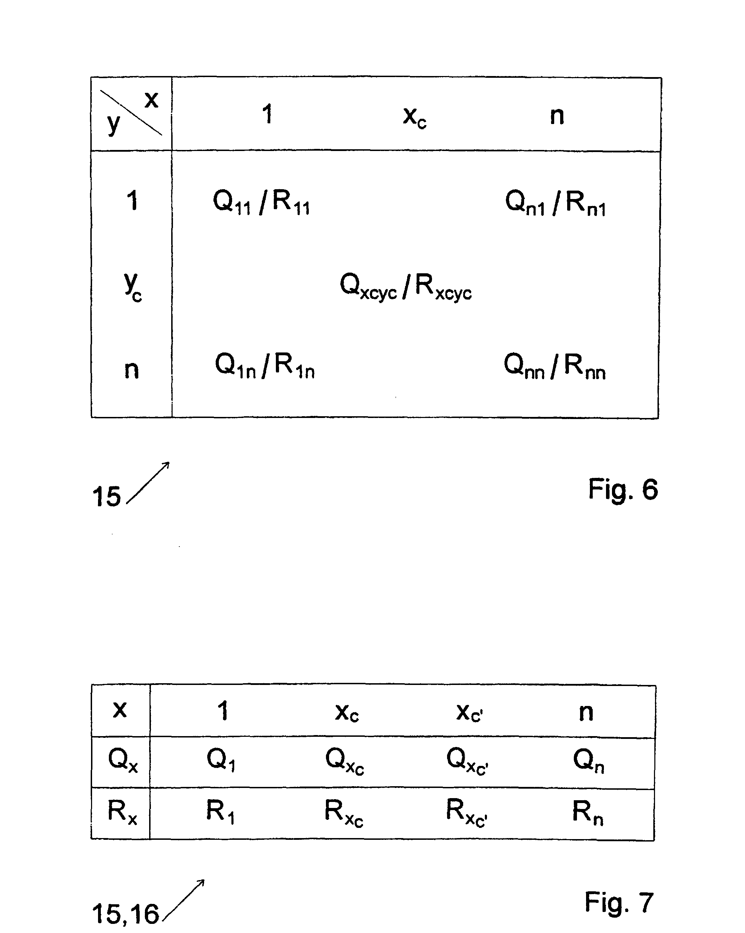

Gemäss der Erfindung kann das Mobiltelekommunikationsendgerät 1 auf mehrere Versorgungskarten zugreifen, welche die mit den verschiedenen verfügbaren Mobilfunknetzen 6, 6' erreichte Versorgungsqualität im betroffenen Gebiet angeben. Wie auf der Figur 5 dargestellt, können diese Angaben von den verschiedenen Betreibern in verschiedenen Servern 7,7' ermittelt und abgelegt werden oder, in einer nicht dargestellten Variante, von einem einzigen Betreiber oder von einem Dritten ermittelt und zur Verfügung gestellt werden (beispielsweise gegen Zahlung). Diese verschiedenen Versorgungskarten können dann in verschiedenen Speicherbereichen 15, 16 des Endgerätes 1 oder der Identifizierungskarte 11 kopiert werden. In einer mit der Figur 6 dargestellten Variante enthält eine einzige Versorgungskarte die mit verschiedenen Mobilfunknetzen 6 bzw. 6' erreichte Verteilung der Qualität Q_{xy} bzw. R_{xy} an den Punkten x,y. Kann die gefahrene Trajektorie als Funktion einer einzigen Variabel x angegeben werden, können dann die Qualitätsangaben Qₓ im ersten Mobilfunknetz 6 und Rₓ im zweiten Mobilfunknetz 6' auch in einer vereinfachten Matrix mit nur zwei Zeilen abgelegt werden, wie auf der Figur 7 dargestellt.

Anhand dieser Vielzahl von Versorgungskarten kann ein Benutzer die mit verschiedenen verfügbaren Mobilfunknetzen 6, 6' erreichte Versorgungsqualität Q_{xy} bzw. R_{xy} entlang der geplanten Trajektorie 2 im voraus ermitteln, und somit feststellen, durch welches Netz die gefahrene Strecke am besten versorgt wird. Auf diese Weise kann ein Mobilbenutzer entscheiden, in welches Netz er sich einloggen will, damit er die beste Versorgungsqualität entlang der gefahrenen Trajektorie bekommt, beispielsweise die billigste Verbindung oder die längst mögliche Verbindungszeit bis zum Verbindungsabbruch zur Zeit t_{c}. Die Netzselektion kann auch automatisch mit einer entsprechenden Software im Endgerät und/oder im ldentifizierungsmodul erfolgen .

Wir werden jetzt als Beispiel eine erste mögliche Anwendung des erfindungsgemässen Verfahrens für die Datenkommunikation zwischen einem Zug und einem Server 8 beschreiben.

Es sind schon mehrere Systeme bekannt, um die Fahrkarten von Passagieren eines Zuges elektronisch zu prüfen. Es wurde unter anderem schon vorgeschlagen, Passagiere mit kontaktlosen elektronischen Fahrkarten, beispielsweise in einer Chipkarte oder in einem Mobiltelefon integriert, zu versehen, und diese Fahrkarten kontaktlos beim Ein- und Aussteigen zu lesen. Die gelesenen Daten werden dann von Datenverarbeitungsmitteln im Zug gesammelt. Die Reisedaten einer Vielzahl von Passagieren können anschliessend von einem mit diesen Datenverarbeitungsmitteln verbundenen Mobilgerät 1 durch ein Mobilfunknetz 6 als Datenblock einem Server 8 der Eisenbahngesellschaft gesendet werden. Dieser Server kann beispielsweise den Fahrpreis einem Konto der Passagiere bei einem Finanzinstitut belasten oder die gefahrene Strecke monatlich verrechnen. Wenn der Zug durch ein schlecht versorgtes Gebiet fährt, beispielsweise über eine Strecke mit vielen Tunnell, kann es sich jedoch als schwierig erweisen, die optimale Sendezeit zu finden, um einen grossen Datenblock dem Server 8 zu senden, ohne dass die Verbindung unterbrochen wird.

Gemäss der Erfindung berechnet das Mobiltelekommunikationsendgerät 1 im Zug diese optimale Sendezeit, indem die Versorgungsqualität entlang der gefahrenen Bahn anhand einer in einem Speicherbereich 15 bzw. 16 gespeicherten Versorgungskarte im voraus ermittelt wird. Auf diese Weise kann das Endgerät 1 die optimale Sendezeit für Daten bestimmen, die an externe Geräte 8 gesendet werden müssen. Die optimale Sendezeit kann beispielsweise dem Anfang der nächsten Periode entsprechen, die eine ununterbrochene Übertragung des Datenblocks erlaubt. In einer Variante ist die optimale Sendezeit auch von einer verlangten Dienstqualität (QoS, Quality of Services) entlang der gefahrenen Strecke abhängig. Fährt der Zug über eine Strecke, entlang welcher der Verbindungspreis unterschiedlich ist, beispielsweise durch mehrere Länder, kann die Sendezeit auch vom im voraus berechneten Preis für die Übertragung des Datenblocks abhängig sein. Wenn die Daten vertraulich sind, und wenn die gewährleistete Vertraulichkeit entlang der Trajektorie variiert, kann die Sendezeit ausserdem von der verlangten Vertraulichkeit abhängig sein.

Falls der Zug durch ein Gebiet fährt, das von mehreren verschiedenen Mobilfunknetzen versorgt wird, kann ausserdem das Mobiltelekommunikationsendgerät 1 im Zug anhand der Angaben über die geographische Verteilung der mit diesen verschiedenen Netzen erreichten Versorgungsqualität Q_{xy}, R_{xy} ermitteln, welches Netz die beste Versorgung entlang der gefahrenen Strecke gewährleistet und sich somit automatisch in dieses Netz einloggen.

Der Zug weist ausserdem vorzugsweise eine Wetterstation auf, mit welcher die aktuelle Wetterlage bewertet werden kann. Ausserdem verfügt der Zug über eine Uhr, um die Jahreszeit zu ermitteln. Diese Angaben werden vorzugsweise verwendet, um eine differenziertere Vorhersage der Versorgungsqualität in Abhängigkeit der aktuellen Wetterlage und der Jahreszeit zu machen.

Vorzugsweise sendet mindestens ein Teil der Züge periodisch oder auf Anfrage Angaben über die momentane Wetterlage und über die gemessene Versorgungsqualität an den Server 7, der solche Angaben aus mehreren Zügen auswertet und somit die wetter- und jahreszeitabhängige Versorgungskarte dynamisch aktualisieren kann. Diese im Server 7 ausgewertete Versorgungskarte kann dann in den Mobiltelekommunikationsendgeräten 1 ferngeladen werden.

Wir werden jetzt ein anderes Beispiel einer möglichen Anwendung des erfindungsgemässen Verfahrens für die Mobilkommunikation aus einem Automobil beschreiben.

Ein Autofahrer, der zwischen zwei Punkten in einem Gebiet reisen will, kann diese zwei Punkte in einen Boardcomputer seines Automobiles eingeben. Der Boardcomputer verwendet eine beispielsweise in einem CD-ROM gespeicherte oder über Internet/WAP zugängliche Karte des Strassennetzes, um die optimale Trajektorie 2 des Autos durch das Strassennetz zu ermitteln. Der Boardcomputer ist vorzugsweise mit einem Mobiltelekommunikationsendgerät 1 verbunden oder enthält ein solches Endgerät. Die geplante Trajektorie wird vorzugsweise in einem Speicherbereich 17 des Boardcomputers oder des Endgerätes 1 (beziehungsweise des Moduls 11 im Endgerät) abgelegt.

Eine in einem Speicherbereich 14 des Boardcomputers oder des Endgerätes 1 gespeicherte Anwendungssoftware kann dann auf die abgelegte Versorgungskarte 15, 16 zugreifen, um die Versorgungsqualität entlang dieser Trajektorie 2 zu ermitteln.

Verfügt der Boardcomputer über eine genügende Anzeige, wird vorzugsweise die vorhergesagte Versorgungsqualität visuell wiedergegeben, beispielsweise mit Farben auf einer dargestellten geographischen Karte oder als Tabelle, in welcher die versorgten und nicht versorgten Strecken angegeben sind.

Sind mehrere Trajektorien zwischen dem vom Fahrer angegebenen Startpunkt und Endziel möglich, ist vorzugsweise die vom Boardcomputer empfohlene Strecke von der Versorgungsqualität entlang der verschiedenen Strecken abhängig. In einer Variante kann der Boardcomputer die Versorgungsqualität entlang mehrerer Strecken ermitteln und wiedergeben, damit der Autofahrer selbst entscheiden kann, welche Strecke er fahren will.

Während der Reise kann vorzugsweise der Boardcomputer die geplante zukünftige Versorgungsqualität Q_{xy} anzeigen und somit beispielsweise die nächsten Verbindungsabbrüche angeben. Vorzugsweise kann das Endgerät 1 ein Tonsignal kurz vor einem geplanten Verbindungsabbruch erzeugen oder die mögliche Verbindungszeit bis zum nächsten Verbindungsabbruch visuell wiedergeben.

Sind Angaben Q_{xy}, R_{xy} über die Versorgungsqualität mit mehreren Mobilfunknetzen 6, 6' verfügbar, kann somit der Boardcomputer das Mobilfunknetz empfehlen, das die geplante Strecke 2 am besten versorgt, oder das Endgerät 1 automatisch in dieses Mobilfunknetz einloggen.

## Patentansprüche

1. Verfahren zur Ermittlung der Versorgungsqualität entlang einer Trajektorie in einem Telekommunikationsnetz, wobei das Verfahren mit einem Mobiltelekommunikationsendgerät (1) in einem Vehikel durchgeführt wird, wobei das benannte Vehikel sich durch ein Gebiet bewegt, über welches sich ein Mobilfunknetz (6) erstreckt, wobei die Qualität der Versorgung innerhalb des Gebiets unterschiedlich ist, wobei das benannte Vehikel Ober Standortbestimmungsmittel (18) verfügt,
**dadurch gekennzeichnet, dass** die Trajektorie (2) des Vehikels im voraus ermittelt wird,
und dass die Versorgungsqualität entlang dieser Trajektorie anhand der im benannten Mobiltelekommunikationsendgerät verfügbaren Angaben (15, 16) über die geographische Verteilung der Versorgungsqualität (Q_{xy}) ermittelt wird.

2. Verfahren gemäss Anspruch 1, in welchem die benannten Standortbestimmungsmittel (18) den Standort des Vehikels mit Signalen aus einem Standortbestimmungssatellit (9) ermitteln.

3. Verfahren gemäss Anspruch 1, in welchem die benannten Standortbestimmungsmittel (18) den Standort des Vehikels mit Signalen aus einer Vielzahl von Basisstationen (5, 5') im Mobilfunknetz ermitteln.

4. Verfahren gemäss einem der vorhergehenden Ansprüche, in welchem die benannte Trajektorie (2) eine einzige Dimension aufweist

5. Verfahren gemäss Anspruch 4, in welchem das benannte Vehikel ein Zug ist und die benannte Trajektorie (2) einer Bahnstrecke entspricht.

6. Verfahren gemäss Anspruch 4, in welchem das benannte Vehikel ein Auto ist und die benannte Trajektorie (2) einer vordefinierten Strassenstrecke entspricht.

7. Verfahren gemäss Anspruch 6, in welchem die benannte Strassenstrecke in einen Boardcomputer vom Autofahrer eingegeben wird.

8. Verfahren gemäss einem der Ansprüche 1 bis 3, in welchem die benannte Trajektorie (2) zwei Dimensionen aufweist.

9. Verfahren gemäss dem vorhergehenden Anspruch, in welchem das benannte Vehikel ein Auto ist, und die benannte Trajektorie (2) einer vordefinierten Strassenstrecke entspricht.

10. Verfahren gemäss dem vorhergehenden Anspruch, in welchem die benannte Strassenstrecke in einen Boardcomputer vom Autofahrer eingegeben wird.

11. Verfahren gemäss einem der vorhergehenden Ansprüche, in welchem die benannte Trajektorie (2) anhand der Geschwindigkeit des Vehikels ermittelt wird.

12. Verfahren gemäss einem der Ansprüche 1 bis 11, in welchem die benannte Versorgungsqualität (Q_{xy}) binär angegeben wird.

13. Verfahren gemäss einem der Ansprüche 1 bis 11, in welchem die benannte Versorgungsqualität (Q_{xy}) einer Dienstqualität (QoS) entspricht.

14. Verfahren gemäss einem der Ansprüche 1 bis 11, in welchem die benannte Versorgungsqualität (Q_{xy}) eine Angabe über den Verbindungspreis entlang der Trajektorie (2) umfasst

15. Verfahren gemäss einem der Ansprüche 1 bis 11, in welchem die benannte Versorgungsqualität (Q_{xy}) eine Angabe über die Vertraulichkeit von Datenübertragungen entlang der Trajektorie (2) umfasst.

16. Verfahren gemäss einem der Ansprüche 1 bis 15, in welchem die benannten Angaben (15, 16) über die geographische Verteilung der Versorgungsqualität (Q_{xy}) mindestens eine bidimensionale Versorgungskarte enthalten.

17. Verfahren gemäss einem der Ansprüche 1 bis 16, in welchem die benannten Angaben (15, 16) über die geographische Verteilung der Versorgungsqualität (Q_{xy}) die mit einer Vielzahl von verschiedenen Mobilnetzbetreibern betriebenen Mobilfunknetzen (6, 6') erreichte Versorgungsqualität (Q_{xy}, R_{xy}) umfassen.

18. Verfahren gemäss einem der Ansprüche 1 bis 17, in welchem die benannten Angaben (15, 16) über die geographische Verteilung der Versorgungsqualität (Q_{xy}) wetterabhängig sind
und in welchem das benannte Vehikel das aktuelle Wetter mit einer Wetterstation ermittelt.

19. Verfahren gemäss einem der Ansprüche 1 bis 18, in welchem die benannten Angaben (15, 16) über die geographische Verteilung der Versorgungsqualität (Q_{xy}) von der Jahreszeit abhängig sind
und in welchem das benannte Vehikel die aktuelle Jahreszeit mit einer Uhr ermittelt.

20. Verfahren gemäss einem der Ansprüche 1 bis 19, in welchem die benannten Angaben (15, 16) über die geographische Verteilung der Versorgungsqualität (Q_{xy}) im benannten
Mobiltelekommunikationsendgerät (1) gespeichert sind.

21. Verfahren gemäss einem der Ansprüche 1 bis 19, in welchem die benannten Angaben (15, 16) über die geographische Verteilung der Versorgungsqualität (Q_{xy}) in einer Identifizierungskarte (11) im benannten Mobiltelekommunikationsendgerät (1) gespeichert sind.

22. Verfahren gemäss einem der Ansprüche 1 bis 21, in welchem die benannten Angaben (15, 16) über die geographische Verteilung der Versorgungsqualität (Q_{xy}) dynamisch aktualisiert werden.

23. Verfahren gemäss einem der Ansprüche 1 bis 22, in welchem eine Vielzahl von benannten Mobiltelekommunikationsendgeräten (1) die an ihrer Position erreichte Versorgungsqualität an mindestens einen Server (7, 7') im benannten Mobilfunknetz (6, 6') senden.

24. Verfahren gemäss Anspruch 23, in welchem die benannten Mobiltelekommunikationsendgeräte (1), welche die an ihrer Position erreichte Versorgungsqualität (Q_{xy}) an einen Server (7, 7') im benannten Mobilfunknetz (6, 6') senden, ausserdem ihre Position senden.

25. Verfahren gemäss einem der Ansprüche 23 bis 24; in welchem die benannten Mobiltelekommunikationsendgeräte (1), welche die an ihrer Position erreichte Versorgungsqualität (Q_{xy}) an einen Server (7, 7') im benannten Mobilfunknetz (6) senden, ausserdem Angaben über die Wetterlage an dieser Position senden.

26. Verfahren gemäss einem der Ansprüche 1 bis 25, in welchem die benannte Versorgungsqualität (Q_{xy}) entlang der Trajektorie (2) visuell auf einer Anzeige (10) angezeigt wird.

27. Verfahren gemäss einem der Ansprüche 1 bis 26, in welchem die Sendezeit von Daten anhand der benannten ermittelten Versorgungsqualität (Q_{xy}) entlang der Trajektorie (2) ermittelt wird.

28. Verfahren gemäss Anspruch 27, in welchem die benannte Sendezeit von der Grösse der Daten abhängig ist.

29. Verfahren gemäss einem der Ansprüche 27 bis 28, in welchem die benannte Sendezeit von der verlangten Dienstqualität abhängig ist.

30. Verfahren gemäss einem der Ansprüche 27 bis 29, in welchem die benannte Sendezeit vom erwarteten Preis für die Verbindung abhängig ist.

31. Verfahren gemäss einem der Ansprüche 27 bis 30, in welchem die benannte Sendezeit von der Dauer bis zum nächsten Verbindungsabbruch (t_{c}) abhängig ist.

32. Verfahren gemäss einem der Ansprüche 27 bis 31, In welchem das benannte Vehikel ein Zug ist und in welchem die benannten Daten Ticketinginformationen umfassen.

33. Verfahren gemäss einem der Ansprüche 1 bis 32, in welchem die Dauer bis zum nächsten Verbindungsabbruch (t_{c}) anhand der benannten ermittelten Versorgungsqualität (Q_{xy}) entlang der Trajektorie (2) ermittelt wird
und in welchem ein Signal kurz vor diesem Verbindungsabbruch wiedergegeben wird.

34. Verfahren gemäss einem der Ansprüche 1 bis 33, in welchem die Versorgungsqualltät (Q_{xy}) entlang einer Vielzahl möglichen Trajektorien (2) zwischen zwei Punkten angezeigt wird.

35. Verfahren gemäss einem der Ansprüche 17 bis 34, in welchem das Mobilfunknetz (6 oder 6'), in welches das Mobiltelekommunikationsendgerät (1) sich einloggt, anhand der benannten Angaben über die geographische Verteilung der Versorgungsqualität (Q_{xy}), die mit den benannten Mobilfunknetzen (6, 6') erreicht wird, ausgewählt wird.

36. Verfahren gemäss dem vorhergehenden Anspruch, in welchem das Mobilfunknetz (6 oder 6'), in welches das Mobiltelekommunikationsendgerät (1) sich einloggt, von der verlangten Dienstqualität abhängig ist.

37. Verfahren gemäss einem der Ansprüche 35 bis 36, in welchem das Mobilfunknetz (6 oder 6'), in welches das Mobiltelekommunikationsendgerät (1) sich einloggt, vom erwarteten Preis der Verbindung durch die verschiedenen Mobilfunknetze abhängig ist.

38. Verfahren gemäss einem der Ansprüche 1 bis 37, in welchem das Bereitstellen der Angaben (15, 16) über die geographische Verteilung der Versorgungsqualität (Q_{xy}) vom Betreiber des Mobilfunknetzes (6, 6') verrechnet wird.

39. Mobiltelekommunikationsendgerät (1), das dazu geeignet ist, in einem Mobilfunknetz (6, 6') eingesetzt zu werden, welches sich über ein Gebiet erstreckt, innerhalb welchem die Qualität der Versorgung unterschiedlich ist,
**dadurch gekennzeichnet, dass** es folgende Merkmale umfasst:
- Mittel, um die Trajektorie des Vehikels im voraus zu ermitteln,
- einen Speicherbereich, in welchem Angaben über die geographische Verteilung der Versorgungsqualität abgelegt sind;
- Mittel, um die Versorgungsqualität entlang der benannten Trajektorie anhand der benannten Angaben zu ermitteln.

40. Mobiltelekommunikationsendgerät gemäss Anspruch 39, welches Standortbestimmungsmittel (18) aufweist.

41. Mobiltelekommunikationsendgerät gemäss Anspruch 40, in welchem die benannten Standortbestimmungsmittel dazu geeignet sind, den Standort des Gerätes (1) mit Signalen aus einem Standortbestimmungssatellit (9) zu ermitteln.

42. Mobiltelekommunikationsendgerät gemäss Anspruch 40, in welchem die benannten Standortbestimmungsmittel (18) dazu geeignet sind, den Standort des Gerätes (1) mit Signalen aus einer Vielzahl von Basisstationen (5, 5') im Mobilfunknetz (6,6') zu ermitteln.

43. Mobiltelekommunikationsendgerät gemäss Anspruch 39, in welchem die Trajektorie (2) eine einzige Dimension aufweist.

44. Mobiltelekommunikationsendgerät gemäss Anspruch 43, wobei die Trajektorie einer vordefinierten Strassenstrecke entspricht und das Mobiltelekommunikationsendgerät mit einem Boardcomputer in einem Auto verbunden wird mit welchem die benannte Strassenstrecke vom Autofahrer eingegeben werden kann.

45. Moblitelekommunikationsendgerät gemäss Anspruch 39, in welchem die Trajektorie (2) zwei Dimensionen aufweist.

46. Mobiltelekommunikationsendgerät gemäss dem vorhergehenden Anspruch, in welchem die Trajektorie (2) einer vordefinierten Strassenstrecke entspricht, und das Mobiltelekommunikationsendgerät mit einem Boardcomputer in einem Auto verbunden wird, mit welchem die benannte Strassenstrecke vom Autofahrer eingegeben werden kann.

47. Mobiltelekommunikationsendgerät gemäss einem der Ansprüche 39 bis 46, In welchem die benannte Versorgungsqualität (Q_{xy}) binär angegeben ist.

48. Mobiltelekommunikationsendgerät gemäss einem der Ansprüche 39 bis 46, in welchem die benannte Versorgungsqualität (Q_{xy}) Dienstqualitätsangaben (QoS) umfasst.

49. Mobiltelekommunikationsendgerät gemäss einem der Ansprüche 39 bis 46, in welchem die benannte Versorgungsqualität (Q_{xy}) eine Angabe über den Verbindungspreis entlang der Trajektorie (2) umfasst.

50. Mobiltelekommunikationsendgerät gemäss einem der Ansprüche 39 bis 46, in welchem die benannte Versorgungsqualität (Q_{xy}) eine Angabe über die Vertraulichkeit von Datenübertragungen entlang der Trajektorie (2) umfasst.

51. Mobiltelekommunikationsendgerät gemäss einem der Ansprüche 39 bis 50, in welchem die benannten Angaben über die geographische Verteilung der Versorgungsqualität (Q_{xy}) mindestens eine bidimensionale Versorgungskarte enthalten.

52. Mobiltelekommunikationsendgerät gemäss einem der Ansprüche 39 bis 51, in welchem die benannten Angaben über die geographische Verteilung der Versorgungsqualität (Q_{xy}) die mit einer Vielzahl von verschiedenen Mobilnetzbetreibern betriebenen Mobilfunknetzen (6, 6') erreichte Versorgungsqualität (Q_{xy}, R_{xy}) umfassen.

53. Mobiltelekommunikationsendgerät gemäss einem der Ansprüche 39 bis 52, das mit einer Wetterstation verbunden ist und in welchem die benannten Angaben über die geographische Verteilung der Versorgungsqualität (Q_{xy}) wetterabhängig sind.

54. Mobiltelekommunikationsendgerät gemäss einem der Ansprüche 39 bis 53, in welchem die benannten Angaben über die geographische Verteilung der Versorgungsqualität (Q_{xy}) von der Jahreszeit abhängig sind.

55. Mobiltelekommunikationsendgerät gemäss einem der Ansprüche 39 bis 54, in welchem der benannte Speicherbereich im Endgerät vorhanden ist.

56. Mobiltelekommunikationsendgerät gemäss einem der Ansprüche 39 bis 55, in welchem der benannte Speicherbereich in einer Identifizierungskarte im Endgerät vorhanden ist.

## Claims

1. Method for determining the coverage quality along a trajectory in a telecommunication network, whereas the method is performed with a mobile telecommunication terminal (1) in a vehicle, whereas said vehicle is moving through an area over which a mobile radio network (6) extends, whereas the coverage quality within the area is variable, whereas said vehicle has location-determining means (18),
**characterized in that** the trajectory (2) of the vehicle is determined in advance,
and **in that** the coverage quality along this trajectory is determined on the basis of the indications (15, 16) about the geographical distribution of the coverage quality (Q_{xy}) available in said mobile telecommunication terminal.

2. Method according to claim 1, wherein said location-determining means (18) determine the location of the vehicle with signals from a location-determining satellite (9).

3. Method according to claim 1, wherein said location-determining means (18) determine the location of the vehicle with signals from a plurality of basis stations (5, 5') in the mobile radio network.

4. Method according to one of the preceding claims,
wherein said trajectory (2) has a single dimension.

5. Method according to claim 4, wherein said vehicle is a train and said trajectory (2) corresponds to a stretch of railway line.

6. Method according to claim 4, wherein said vehicle is a car and said trajectory (2) corresponds to a predefined stretch of road.

7. Method according to claim 6, wherein said stretch of road is entered into a board computer by the car driver.

8. Method according to one of the claims 1 to 3, wherein said trajectory (2) has two dimensions.

9. Method according to the preceding claim, wherein said vehicle is a car and said trajectory (2) corresponds to a predefined stretch of road.

10. Method according to the preceding claim, wherein said stretch of road is entered into a board computer by the car driver.

11. Method according to one of the preceding claims, wherein said trajectory (2) is determined on the basis of the vehicle's speed.

12. Method according to one of the claims 1 to 11,
wherein said coverage quality (Q_{xy}) is indicated binarily.

13. Method according to one of the claims 1 to 11, wherein said coverage quality (Q_{xy}) corresponds to a quality of service (QoS).

14. Method according to one of the claims 1 to 11, wherein said coverage quality (Q_{xy}) comprises an indication about the connection cost along the trajectory (2).

15. Method according to one of the claims 1 to 11, wherein said coverage quality (Q_{xy}) comprises an indication about the confidentiality of data transmissions along the trajectory (2).

16. Method according to one of the claims 1 to 15, wherein said indications (15, 16) about the geographical distribution of the coverage quality (Q_{xy}) contain at least one two-dimensional coverage map.

17. Method according to one of the claims 1 to 16, wherein said indications (15, 16) about the geographical distribution of the coverage quality (Q_{xy}) comprise the coverage quality (Q_{xy,} R_{xy}) achieved with a plurality of mobile radio networks (6, 6') operated by different mobile network operators.

18. Method according to one of the claims 1 to 17, wherein said indications (15, 16) about the geographical distribution of the coverage quality (Q_{xy}) are weather-dependent
and wherein said vehicle determines the current weather with a weather station.

19. Method according to one of the claims 1 to 18,
wherein said indications (15, 16) about the geographical distribution of the coverage quality (Q_{xy}) are dependent on the season
and wherein said vehicle determines the current season with a clock.

20. Method according to one of the claims 1 to 19, wherein said indications (15, 16) about the geographical distribution of the coverage quality (Q_{xy}) are stored in said mobile telecommunication terminal (1).

21. Method according to one of the claims 1 to 19, wherein said indications (15, 16) about the geographical distribution of the coverage quality (Q_{xy}) are stored in an identification card (11) in said mobile telecommunication terminal (1).

22. Method according to one of the claims 1 to 21, wherein said indications (15, 16) about the geographical distribution of the coverage quality (Q_{xy}) are updated dynamically.

23. Method according to one of the claims 1 to 22, wherein a plurality of said mobile telecommunication terminals (1) send the quality of coverage achieved at their position to at least one server (7, 7') in said mobile radio network (6, 6').

24. Method according to claim 23, wherein said mobile telecommunication terminals (1) which send the coverage quality (Q_{xy}) achieved at their position to a server (7, 7') in said mobile radio network (6, 6') also send their position.

25. Method according to one of the claims 23 to 24, wherein said mobile telecommunication terminals (1) which send the coverage quality (Q_{xy}) achieved at their position to a server (7, 7') in said mobile radio network (6) also send indications about the weather situation at this position.

26. Method according to one of the claims 1 to 25, wherein said coverage quality (Q_{xy}) along the trajectory (2) is visually displayed on a display (10).

27. Method according to one of the claims 1 to 26, wherein the data transmission time is determined on the basis of said determined coverage quality (Q_{xy}) along the trajectory (2).

28. Method according to claim 27, wherein said transmission time is dependent on the size of the data.

29. Method according to one of the claims 27 to 28, wherein said transmission time is dependent on the requested quality of service.

30. Method according to one of the claims 27 to 29, wherein said transmission time is dependent on the expected cost for the connection.

31. Method according to one of the claims 27 to 30, wherein said transmission time is dependent on the duration until the next connection interruption (t_{c}).

32. Method according to one of the claims 27 to 31, wherein said vehicle is a train and wherein said data comprise ticketing information.

33. Method according to one of the claims 1 to 32, wherein the duration until the next connection interruption (t_{c}) is determined on the basis of said determined coverage quality (Q_{xy}) along the trajectory (2)
and wherein a signal is reproduced shortly before this connection interruption.

34. Method according to one of the claims 1 to 33, wherein the coverage quality (Q_{xy}) along a plurality of possible trajectories (2) between two points is displayed.

35. Method according to one of the claims 17 to 34, wherein the mobile radio network (6 or 6') which the mobile telecommunication terminal (1) logs into is selected on the basis of said indications about the geographical distribution of the coverage quality (Q_{xy}) achieved with said mobile radio networks (6, 6').

36. Method according to the preceding claim, wherein the mobile radio network (6 or 6') which the mobile telecommunication terminal (1) logs into is dependent on the requested quality of service.

37. Method according to one of the claims 35 to 36, wherein the mobile radio network (6, 6') which the mobile telecommunication network terminal (1) logs into is dependent on the expected cost of the connection through the different mobile radio networks.

38. Method according to one of the claims 1 to 37, wherein the making available of the indications (15, 16) about the geographical distribution of the coverage quality (Q_{xy}) is billed by the operator of the mobile radio network (6, 6').

39. Mobile telecommunication terminal (1) suited for being used in a mobile radio network (6, 6') that extends over an area within which the coverage quality is variable,
**characterized in that** it comprises the following features:
means for determining in advance the vehicle's trajectory,
a storage area in which indications about the geographical distribution of the coverage quality are stored;
means for determining the coverage quality along said trajectory on the basis of said indications.

40. Mobile telecommunication terminal according to claim 39, having location-determining means (18).

41. Mobile telecommunication terminal according to claim 40, wherein said location-determining means are suited for determining the location of the terminal (1) with signals from a location-determining satellite (9).

42. Mobile telecommunication terminal according to claim 40, wherein said location-determining means (18) are suited for determining the location of the device (1) with signals from a plurality of basis stations (5, 5') in the mobile radio network (6, 6').

43. Mobile telecommunication terminal according to claim 39, wherein the trajectory (2) has a single dimension.

44. Mobile telecommunication terminal according to claim 43, wherein the trajectory corresponds to a predefined stretch of road and the mobile telecommunication terminal is connected with a board computer in a car, with which said stretch of road can be entered by the car driver.

45. Mobile telecommunication terminal according to claim 39, wherein the trajectory (2) has two dimensions.

46. Mobile telecommunication terminal according to the preceding claim, wherein the trajectory corresponds to a predefined stretch of road and the mobile telecommunication terminal is connected with a board computer in a car, with which said stretch of road can be entered by the car driver.

47. Mobile telecommunication terminal according to one of the claims 39 to 46, wherein said coverage quality (Q_{xy}) is indicated binarily.

48. Mobile telecommunication terminal according to one of the claims 39 to 46, wherein said coverage quality (Q_{xy}) comprises indications on the quality of service (QoS).

49. Mobile telecommunication terminal according to one of the claims 39 to 46, wherein said coverage quality (Q_{xy}) comprises an indication about the connection cost along the trajectory (2).

50. Mobile telecommunication terminal according to one of the claims 39 to 46, wherein said coverage quality (Q_{xy}) comprises an indication about the confidentiality of data transmissions along the trajectory (2).

51. Mobile telecommunication terminal according to one of the claims 39 to 50, wherein said indications about the geographical distribution of the coverage quality (Q_{xy}) contain at least one two-dimensional coverage map.

52. Mobile telecommunication terminal according to one of the claims 39 to 51, wherein said indications about the geographical distribution of the coverage quality (Q_{xy}) comprise the coverage quality (Q_{xy,} R_{xy}) achieved with a plurality of mobile radio networks (6, 6') operated by different mobile network operators.

53. Mobile telecommunication terminal according to one of the claims 39 to 52, connected with a weather station and wherein said indications about the geographical distribution of the coverage quality (Q_{xy}) are weather-dependent.

54. Mobile telecommunication terminal according to one of the claims 39 to 53, wherein said indications about the geographical distribution of the coverage quality (Q_{xy}) are dependent on the season.

55. Mobile telecommunication terminal according to one of the claims 39 to 54, wherein said storage area is in the terminal.

56. Mobile telecommunication terminal according to one of the claims 39 to 55, wherein said storage area is in an identification card in the terminal.

## Revendications

1. Méthode pour la détermination de la qualité de couverture le long d'une trajectoire dans un réseau de télécommunication, la méthode étant effectuée avec un terminal de télécommunication mobile (1) dans un véhicule, ledit véhicule se déplaçant à travers une région sur laquelle s'étend un réseau radio mobile (6), la qualité de couverture à l'intérieur de la région étant variable, ledit véhicule ayant des moyens de localisation (18),
**caractérisé en ce que** la trajectoire (2) du véhicule est déterminée à l'avance,
et **en ce que** la qualité de couverture le long de cette trajectoire est déterminée sur la base des indications (15, 16) sur la distribution géographique de la qualité de couverture (Q_{xy}) disponibles dans ledit terminal de télécommunication mobile.

2. Méthode selon la revendication 1, dans laquelle lesdits moyens de localisation (18) déterminent l'emplacement du véhicule avec des signaux d'un satellite de localisation (9).

3. Méthode selon la revendication 1, dans laquelle lesdits moyens de localisation (18) déterminent l'emplacement du véhicule avec des signaux d'une pluralité de stations de base (5, 5') dans le réseau radio mobile.

4. Méthode selon l'une des revendications précédentes, dans laquelle ladite trajectoire (2) a une seule dimension.

5. Méthode selon la revendication 4, dans laquelle ledit véhicule est un train et ladite trajectoire (2) correspond à une portion de voie ferrée.

6. Méthode selon la revendication 4, dans laquelle ledit véhicule est une voiture et ladite trajectoire (2) correspond à une portion de route prédéfinie.

7. Méthode selon la revendication 6, dans laquelle ladite portion de route est introduite dans un ordinateur de bord par le conducteur de la voiture.

8. Méthode selon l'une des revendications 1 à 3, dans laquelle ladite trajectoire (2) a deux dimensions.

9. Méthode selon la revendication précédente, dans laquelle ledit véhicule est une voiture et ladite trajectoire (2) correspond à une portion de route prédéfinie.

10. Méthode selon la revendication précédente, dans laquelle ladite portion de route est introduite dans un ordinateur de bord par le conducteur de la voiture.

11. Méthode selon l'une des revendications précédentes, dans laquelle ladite trajectoire (2) est déterminée sur la base de la vitesse du véhicule.

12. Méthode selon l'une des revendications 1 à 11, dans laquelle ladite qualité de couverture (Q_{xy}) est indiquée sous forme binaire.

13. Méthode selon l'une des revendications 1 à 11, dans laquelle ladite qualité de couverture (Q_{xy}) correspond à une qualité de service (QoS).

14. Méthode selon l'une des revendications 1 à 11, dans laquelle ladite qualité de couverture (Q_{xy}) comprend une indication sur le prix de connexion le long de la trajectoire (2).

15. Méthode selon l'une des revendications 1 à 11, dans laquelle ladite qualité de couverture (Q_{xy}) comprend une indication sur la confidentialité de transmissions de données le long de la trajectoire (2).

16. Méthode selon l'une des revendications 1 à 15, dans laquelle lesdites indications (15, 16) sur la distribution géographique de la qualité de couverture (Q_{xy}) contiennent au moins une carte bidimensionnelle de couverture.

17. Méthode selon l'une des revendications 1 à 16, dans laquelle lesdites indications (15, 16) sur la distribution géographique de la qualité de couverture (Q_{xy}) comprennent la qualité de couverture (Q_{xy}, R_{xy}) atteinte avec une pluralité de réseaux radio mobiles opérés par différents opérateurs de réseaux mobiles.

18. Méthode selon l'une des revendications 1 à 17, dans laquelle lesdites indications (15, 16) sur la distribution géographique de la qualité de couverture (Q_{xy}) sont dépendantes du temps
et dans laquelle ledit véhicule détermine le temps actuel avec une station météorologique.

19. Méthode selon l'une des revendications 1 à 17, dans laquelle lesdites indications (15, 16) sur la distribution géographique de la qualité de couverture (Q_{xy}) sont dépendantes de la saison
et dans laquelle ledit véhicule détermine la saison actuelle avec une horloge.

20. Méthode selon l'une des revendications 1 à 19, dans laquelle lesdites indications (15, 16) sur la distribution géographique de la qualité de couverture (Q_{xy}) sont stockées dans ledit terminal de télécommunication mobile (1).

21. Méthode selon l'une des revendications 1 à 19, dans laquelle lesdites indications (15, 16) sur la distribution géographique de la qualité de couverture (Q_{xy}) sont stockées dans une carte d'identification (11) dans ledit terminal de télécommunication mobile (1).

22. Méthode selon l'une des revendications 1 à 21, dans laquelle lesdites indications (15, 16) sur la distribution géographique de la qualité de couverture (Q_{xy}) sont actualisées dynamiquement.

23. Méthode selon l'une des revendications 1 à 22, dans laquelle une pluralité de dits terminaux de télécommunication mobile (1) envoient à au moins un serveur (7, 7') dans ledit réseau radio mobile (6, 6') la qualité de couverture atteinte à leur position.

24. Méthode selon la revendication 23, dans laquelle lesdits terminaux de télécommunication mobile (1) qui envoient à au moins un serveur (7, 7') dans ledit réseau radio mobile (6, 6') la qualité de couverture atteinte à leur position envoient aussi leur position.

25. Méthode selon l'une des revendications 23 à 24, dans laquelle lesdits terminaux de télécommunication mobile (1) qui envoient à au moins un serveur (7, 7') dans ledit réseau radio mobile (6, 6') la qualité de couverture atteinte à leur position envoient aussi des indications sur les conditions météorologiques à cette position.

26. Méthode selon l'une des revendications 1 à 25, dans laquelle ladite qualité de couverture (Q_{xy}) le long de la trajectoire (2) est affichée visuellement sur un affichage (10).

27. Méthode selon l'une des revendications 1 à 26, dans laquelle le temps de transmission de données est déterminée sur la base de ladite qualité de couverture (Q_{xy}) déterminée, le long de la trajectoire (2).

28. Méthode selon la revendication 27, dans laquelle ledit temps de transmission est dépendant de la taille des données.

29. Méthode selon l'une des revendications 27 à 28, dans laquelle ledit temps de transmission est dépendant de la qualité de service demandée.

30. Méthode selon l'une des revendications 27 à 29, dans laquelle ledit temps de transmission est dépendant du prix escompté pour la connexion.

31. Méthode selon l'une des revendications 27 à 30, dans laquelle ledit temps de transmission est dépendant de la durée jusqu'à la prochaine interruption de connexion (t_{c}).

32. Méthode selon l'une des revendications 27 à 31, dans laquelle ledit véhicule est un train et dans laquelle lesdites données comprennent des informations de billetterie.

33. Méthode selon l'une des revendications 1 à 32, dans laquelle la durée jusqu'à la prochaine interruption de connexion (t_{c}) est déterminée sur la base de ladite qualité de couverture (Q_{xy}) déterminée, le long de la trajectoire (2),
et dans laquelle un signal est reproduit peu avant cette interruption de connexion.

34. Méthode selon l'une des revendications 1 à 33, dans laquelle est affichée la qualité de couverture (Q_{xy}) le long d'une pluralité de trajectoires (2) possibles entre deux points.

35. Méthode selon l'une des revendications 17 à 34, dans laquelle le réseau radio mobile (6 ou 6') avec lequel le terminal de télécommunication mobile (1) entre en communication est sélectionné sur la base desdites indications sur la distribution géographique de la qualité de couverture (Q_{xy}) atteinte avec lesdits réseaux radio mobiles (6, 6').

36. Méthode selon la revendication précédente, dans laquelle le réseau radio mobile (6 ou 6') avec lequel le terminal de télécommunication mobile (1) entre en communication est dépendant de la qualité de service demandée.

37. Méthode selon l'une des revendications 35 à 36, dans laquelle le réseau radio mobile (6 ou 6') avec lequel le terminal de télécommunication mobile (1) entre en communication est dépendant du prix escompté de la connexion à travers les différents réseaux radio mobiles.

38. Méthode selon l'une des revendications 1 à 37, dans laquelle la mise à disposition des indications (15, 16) sur la distribution géographique de la qualité de couverture (Q_{xy}) est facturée par l'opérateur du réseau radio mobile (6, 6').

39. Terminal de télécommunication mobile (1) adapté à être utilisé dans un réseau radio mobile (6, 6') s'étendant sur une région dans laquelle la qualité de couverture est variable,
**caractérisé en ce qu'**il comprend les caractéristiques suivantes:
des moyens pour déterminer à l'avance la trajectoire du véhicule,
une zone de mémoire dans laquelle des indications sur la distribution géographique de la qualité de couverture sont stockées;
des moyens pour déterminer la qualité de couverture le long de ladite trajectoire sur la base desdites indications.

40. Terminal de télécommunication mobile selon la revendication 39, ayant des moyens de localisation (18).

41. Terminal de télécommunication mobile selon la revendication 40, dans lequel lesdits moyens de localisation sont adaptés pour déterminer l'emplacement du terminal (1) avec des signaux d'un satellite de localisation (9).

42. Terminal de télécommunication mobile selon la revendication 40, dans lequel lesdits moyens de localisation (18) sont adaptés pour déterminer l'emplacement du terminal (1) avec des signaux d'une pluralité de stations de base (5, 5') dans le réseau radio mobile (6, 6').

43. Terminal de télécommunication mobile selon la revendication 39, dans lequel ladite trajectoire (2) a une seule dimension.

44. Terminal de télécommunication mobile selon la revendication 43, la trajectoire correspondant à une portion de route prédéfinie et le terminal de télécommunication mobile étant connecté à un ordinateur de bord dans une voiture avec lequel ladite portion de route peut être introduite par le conducteur de la voiture.

45. Terminal de télécommunication mobile selon la revendication 39, dans lequel ladite trajectoire (2) a deux dimensions.

46. Terminal de télécommunication mobile selon la revendication précédente, dans lequel la trajectoire (2) correspond à une portion de route prédéfinie et le terminal de télécommunication mobile est connecté à un ordinateur de bord dans une voiture avec lequel ladite portion de route peut être introduite par le conducteur de la voiture.

47. Terminal de télécommunication mobile selon l'une des revendications 39 à 46, dans lequel ladite qualité de couverture (Q_{xy}) est indiquée sous forme binaire.

48. Terminal de télécommunication mobile selon l'une des revendications 39 à 46, dans lequel ladite qualité de couverture (Q_{xy}) comprend des indications sur la qualité de service (QoS).

49. Terminal de télécommunication mobile selon l'une des revendications 39 à 46, dans lequel ladite qualité de couverture (Q_{xy}) comprend une indication sur le coût de connexion le long de la trajectoire (2).

50. Terminal de télécommunication mobile selon l'une des revendications 39 à 46, dans lequel ladite qualité de couverture (Q_{xy}) comprend une indication sur la confidentialité de transmissions de données le long de la trajectoire (2).

51. Terminal de télécommunication mobile selon l'une des revendications 39 à 50, dans lequel lesdites indications sur la distribution géographique de la qualité de couverture (Q_{xy}) contiennent au moins une carte bidimensionnelle de couverture.

52. Terminal de télécommunication mobile selon l'une des revendications 39 à 51, dans lequel lesdites indications sur la distribution géographique de la qualité de couverture (Q_{xy}) comprennent la qualité de couverture (Q_{xy}, R_{xy}) atteinte avec une pluralité de réseaux radio mobiles (6, 6') opérés par différents opérateurs de réseaux mobiles.

53. Terminal de télécommunication mobile selon l'une des revendications 39 à 52, connecté à une station météorologique et dans lequel lesdites indications sur la distribution géographique de la qualité de couverture (Q_{xy}) sont dépendantes du temps.

54. Terminal de télécommunication mobile selon l'une des revendications 39 à 53, dans lequel lesdites indications sur la distribution géographique de la qualité de couverture (Q_{xy}) sont dépendantes de la saison.

55. Terminal de télécommunication mobile selon l'une des revendications 39 à 54, dans lequel ladite zone de mémoire est dans le terminal.

56. Terminal de télécommunication mobile selon l'une des revendications 39 à 55, dans lequel ladite zone de mémoire est dans une carte d'identification dans le terminal.
